Europäisches Patentamt

European Patent Office

Office européen des brevets

(11) Veröffentlichungsnummer : **0 116 965**
**B1**

(12) **EUROPÄISCHE PATENTSCHRIFT**

(45) Veröffentlichungstag der Patentschrift :
30.11.88

(51) Int. Cl.⁴ : **B 60 N   1/06**

(21) Anmeldenummer : 84101633.0

(22) Anmeldetag : 17.02.84

(54) Triebstock-Verstellvorrichtung, insbesondere für eine Neigungsverstellung von Kraftfahrzeugsitzen.

(30) Priorität : 19.02.83 DE 3305829
01.06.83 DE 3319813

(43) Veröffentlichungstag der Anmeldung :
29.08.84 Patentblatt 84/35

(45) Bekanntmachung des Hinweises auf die Patenterteilung : 30.11.88 Patentblatt 88/48

(84) Benannte Vertragsstaaten :
DE FR GB SE

(56) Entgegenhaltungen :
EP-A- 0 036 824
DE-A- 3 029 558
DE-B- 1 278 264
FR-A- 1 448 282
FR-A- 1 542 095
FR-A- 2 077 168
FR-A- 2 081 646
FR-A- 2 379 267
FR-A- 2 435 229
GB-A- 1 566 288
GB-A- 2 001 730
US-A- 3 286 971
Die Akte enthält technische Angaben, die nach dem
Eingang der Anmeldung eingereicht wurden und die
nicht in dieser Patentschrift enthalten sind.

(73) Patentinhaber : C. Rob. Hammerstein GmbH
Postfach 13 01 18 Merscheiderstrasse 167
D-5650 Solingen 13 (DE)

Firma Daimler-Benz AG
Postfach ,
D-7000 Stuttgart 60 (DE)

(72) Erfinder : Bauer, Heinz
Hammerstrasse 9
D-5650 Solingen 11 (DE)
Erfinder : Frohnhaus, Ernst-Reiner
Hammerstrasse 13
D-5650 Solingen 11 (DE)
Erfinder : Becker, Burckhard, Dipl.-Ing.
Obenkatternberg 25
D-5650 Solingen (DE)
Erfinder : Gedig, Alfred, Dipl.-Ing.
Hammerstrasse 28
D-5650 Solingen 11 (DE)
Erfinder : Klink, Joseph Dipl.-Ing.
Im Kranich 5
D-7270 Nagold (DE)
Erfinder : Koucky, Antonin
Ernst-Barlach-Str. 81
D-7032 Sindelfingen (DE)

(74) Vertreter : Bauer, Wulf, Dr.
Wolfgang-Müller-Strasse 12
D-5000 Köln 51 (Marienburg) (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf eine Triebstock-Verstellvorrichtung nach dem Oberbegriff des Anspruchs 1.

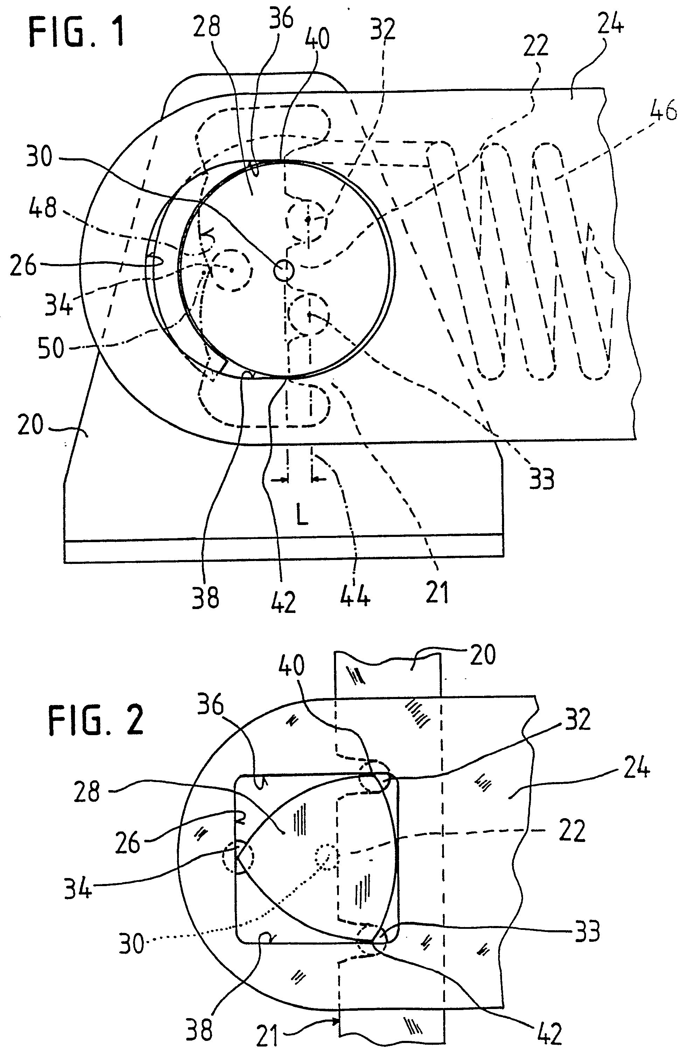

Bei dieser aus der GB-A-2 001 730 vorbekannten Verstellvorrichtung ist der den Zähnen der Zahnstange gegenüberliegende Randbereich der Führungsöffnung so geformt, daß sein Verlauf der Bewegungskontur entweder des Treibrades oder seiner Bolzen entspricht. Für den Fall der Bewegungskontur der Bolzen ist dies aus der anliegenden Fig. 1 durch eine strichpunktierte Linie 48 ersichtlich. Durch die spezielle Formgebung der Führungsöffnung wird eine Zwangsführung des Treibrades in seiner Führungsöffnung erzielt.

Nach der Lehre der GB-A-2 001 730 wird durch die Ausformung der Führungsöffnung eine selbsttätige Blockierung erreicht. Bricht die das Treibrad in Eingriff mit der Zahnstange vorbelastende Feder, so gelangt, wenn auf die Zahnstange eine Kraft einwirkt, der von der Zahnstange abgewandte Vorsprung des Treibrades (bzw. der entsprechende Bolzen) in Anlage an einen Scheitelbereich der Führungsöffnung, wodurch eine weitere Drehbewegung des Treibrades blockiert ist.

Bei der aus der FR-A-2.077.168 bekannten Triebstock-Verstellvorrichtung für die Einstellung der Neigung einer Rückenlehne ist eine bleibende Arretierung der Winkelpositionen der Rückenlehne, auch bei abrupten Belastungen der Rückenlehne durch einen Passagier, dadurch erreicht worden, daß die Zahnstange so gegenüber einem sie tragenden Haltearm geneigt ist, daß die Bolzen des Treibrades bei Belastungen stets positiv in Eingriff mit den Zahnbuchten der Zahnstange belastet werden. Um diese Forderung über die gesamte Länge der Zanstange aufrecht erhalten zu können, ist die Zanstange leicht gebogen.

Diese bekannte Lösung einer belastungssicheren Arretierung läßt sich aber dann nicht anwenden, wenn mit Hilfe einer Triebstock-Verstellvorrichtung direkt, ohne einen Zwischenarm, eine Verstellbewegung ausgeführt werden soll. In diesem Fall kann die Zahnstange nicht entsprechend den Erfordernissen einer lastunabhängigen Arretierung gekrümmt werden, vielmehr muß ihr Verlauf dem gewünschten Verstellweg entsprechen. Hier liegen die Nachteile der bekannten Triebstock-Verstellvorrichtung, insbesondere ist bei dieser eine geradlinige Ausbildung der Zahnstange nicht möglich, sofern die Zahnstange eine gewisse Länge haben soll.

Der Erfindung liegt die Aufgabe zugrunde, die aus der GB-A-2 001 730 bekannte Verstellvorrichtung dahingehend abzuwandeln, daß die Arretierung der Verstellvorrichtung gegen in Richtung der Zahnstange angreifende Kräfte auf anderem Wege und ohne die Notwendigkeit einer Formanpassung der Führungsöffnung an das Treibrad erreicht wird.

Diese Aufgabe wird ausgehend von der Triebstock-Verstellvorrichtung der eingangs genannten Art dadurch gelöst, daß der rechtwinklig zur Zahnstange bestimmte Abstand L der Abstützungspunkte der Verbindungslinie der beiden in Eingriff befindlichen Bolzen im selbsthemmenden Verhältnis zum lichten Abstand der beiden Abstützflächen steht.

Diese Triebstock-Verstellvorrichtung ist somit stets selbsthemmend ausgebildet, sie kann- unabhängig von an den Verstellgliedern angreifenden Kräften — sich nicht selbsttätig verstellen. Sie eignet sich insbesondere für in Richtung der Zahnstange angreifende Kräfte, da auf Grund der Selbsthemmung das selbsttätige Ausrasten jedes der beiden Bolzen nicht möglich ist.

Die Führungsöffnung ermöglicht ein Ausschwenken des Treibrades in Zahnrichtung der Zahnstange und von den Zähnen weg. Sie verhindert jedoch eine Bewegung des Treibrades in Richtung der Zahnstange, da\ das Treibrad in jeweils einem Abstützpunkt an jeder Führungsöffnung anliegt. Die Bewegung des Treibrades quer hierzu kann, falls gewünscht, durch eine Feder oder durch eine Formanpassung entsprechend der Lehre der GB-A-2 001 730, also durch eine Führungsleiste am zweiten Verstellglied begrenzt werden.

In besonders vorteilhafter Ausbildung der Erfindung ist das Treibrad durch ein Bogendreieck begrenzt und hat drei Bolzen. Dabei ist die dem Treibrad angepaßte Führungsöffnung quadratisch ausgebildet, wodurch eine exakte Führung des Treibrades, ohne zusätzliche Hilfsmittel, erreicht wird. In wiederum bevorzugter Ausbildung befinden sich die Ecken des Bogendreiecks auf den Mittelpunkten der Bolzen, die Bolzen selbst ragen also teilweise über das Treibrad hinaus. Sie können an einer zusätzlichen Scheibe, die mit dem Treibrad verbunden ist, gehalten sein, diese Scheibe befindet sich jedoch außerhalb der Führungsöffnung.

Die soeben beschriebene Verstellvorrichtung hat einen besonder einfachen Aufbau, eine kinematisch exakte Funktion und ist dadurch hinsichtlich der Selbsthemmung besonders günstig, daß die auftretenden Hebelarme, die ein Entarretieren bewirken könnten, kurz sind. Die Abstützungspunkte liegen exakt auf der Verbindungslinie der beiden im Eingriff befindlichen Bolzen, anders ausgedrückt hat der Abstand L den Wert 0, so daß die Selbsthemmung auch aus diesem Grunde optimal ist.

In einer weiteren, ebenfalls bevorzugten Ausbildung der Erfindung ist das Treibrad als eine der Führungsöffnung angepaßte Kreisscheibe ausgebildet, deren Radius so gewählt ist, daß das Verhältnis von Abstand L zum Radius den Wert der Reibungszahl der Materialien des Treibrades und der Abstützflächen nicht übersteigt. Bei dieser Lösung werden vorzugsweise drei Bolzen vorgesehen, weil bei drei Bolzen der Abstand der Stellachse von der Verbindungslinie der beiden im Eingriff befindlichen Bolzen kürzer ist als bei einer höheren Anzahl von Bolzen. Auch dieses Ausführungsbeispiel mit rundem Treibrad ermöglicht eine präzise Führung des Treibrades, allerdings unter Zuhilfenahme einer Feder oder einer Führungsleiste. Die Führungsöffnung ist dabei als Rund-Langloch ausgebildet, um eine Bewegung des Treibrades in Zahnrichtung der Zahnstange zuzulassen.

In einer besonders bevorzugten Ausbildung der Erfindung ist das Treibrad nach außen hin begrenzt durch Vorsprünge, deren Verlauf definiert ist durch um den Mittelpunkt eines jeden Bolzens geschlagene, jeweils denselben Radius aufweisende erste Kreisbögen. Die Führungsöffnung ist nach innen begrenzt durch konkave Buchten, die durch zweite Kreisbögen mit untereinander gleichem, aber etwas größerem Radius als die ersten Kreisbögen definiert sind. Die Anzahl der Buchten ist um eins größer als die Anzahl der Bolzen und damit der Vorsprünge. Diese Verstellvorrichtung eignet sich insbesondere für Treibräder mit vier oder fünf Bolzen. Bei derartigen Treibrädern besteht der Vorteil, daß zwischen zwei Einrastpositionen das Treibrad nur um 90 Grad bzw. 72 Grad verschwenkt werden muß. Für den Benutzer, der das Treibrad mittels seiner Hand dreht, bedeutet dies eine besondere Erleichterung.

In bevorzugter Weiterbildung der Erfindung weist das Treibrad oder ein mit ihm drehfest verbundenes, gleichachsiges Teil Rastvorsprünge oder Rastbuchten auf, in die ein mit dem zweiten Verstellglied verbundenes Rastelement selbsttätig eingreifen kann. Dabei sind vorzugsweise mehr Rastvorsprünge bzw. Rastbuchten als Bolzen vorgesehen. Diese Ausbildung ermöglicht eine Einstellbarkeit der Verstellvorrichtung in Zwischenpositionen, die nicht Normalpositionen sind, in denen also nicht zwei Bolzen in Zahnbuchten der Zahnstange vollständig eingreifen, es wird also eine feinstufigere Verstellung erreicht. Bei Überbelastung der Verstellvorrichtung dreht sich diese selbsttätig aus einer Zwischeneinstellposition in die nächstliegende Normalposition. Das Rastelement wird durch Drehen des Treibrades außer Eingriff mit den Rastvorsprüngen oder Rastbuchten gebracht, es rastet also ohne äußere Ausrastmittel aus. Die beschriebene Rasteinrichtung kann jedoch nicht nur dazu verwendet werden, um Zwischeneinstellpositionen zu ermöglichen, sie kann auch herangezogen werden, um die Normalpositionen für einen Benutzer sinnfällig und spürbar beim Einstellvorgang erkennbar zu machen. Eine kinematische Umkehr der Rasteinrichtungen ist möglich.

In weiterhin bevorzugter Ausbildung der Erfindung ist das Treibrad mit einem Rad, vorzugsweise Zahnrad eines Untersetzungsgetriebes verbunden, dessen zweites Rad, das ebenfalls vorzugsweise ein Zahnrad ist, am zweiten Verstellglied um eine Achse drehbar gelagert ist. Dies ermöglicht einen Handantrieb des Treibrades, gegebenenfalls auch einen motorischen Antrieb. Dabei kann das Untersetzungsgetriebe in bevorzugter Weiterbildung als im Rückflußweg sperrendes Getriebe ausgebildet sein, wodurch eine Selbsthemmung durch die besondere geometrische Ausbildung der Triebstock-Verstellvorrichtung selbst auch entfallen kann. Als geeignetes Untersetzungsgetriebe kommen beispielsweise Getriebe nach der DE-A-12 97 496 oder den Ansprüchen 6 und 7 in Frage.

Weitere Merkmale und Vorteile der Erfindung ergeben sich aus der nun folgenden Beschreibung bevorzugter Ausführungsbeispiele, die nicht einschränkend zu verstehen sind und unter Bezugnahme auf die Zeichnung näher erläutert werden. In dieser zeigen :

Fig. 1 eine Seitenansicht einer Verstellvorrichtung mit rundem Treibrad und drei Bolzen, eine Zugfeder ist vorgesehen, alternativ hierzu ist eine Führungsleiste strichpunktiert angedeutet,

Fig. 2 eine Seitenansicht einer Verstellvorrichtung mit ebenfalls drei Bolzen und einem als Bogendreieck ausgebildeten Treibrad,

Fig. 3 eine Seitenansicht einer Verstellvorrichtung mit vier Bolzen und Vorsprüngen am Treibrad,

Fig. 4 eine Seitenansicht einer Verstellvorrichtung in Form eines Gelenkbeschlages mit einem Treibrad mit vier Bolzen,

Fig. 5 eine Darstellung einer Ausführung entsprechend Figur 4, jedoch mit fünf Bolzen,

Fig. 6 eine perspektivische Darstellung einer Verstellvorrichtung ähnlich Figur 1, jedoch mit einer Rasteinrichtung für Zwischeneinstellungen, und

Fig. 7 eine perspektivische, teilweise schnittbildliche Montagezeichnung einer Verstellvorrichtung mit vorgelegtem Untersetzungszahngetriebe.

Die in den Figuren gezeigten Triebstock-Verstellvorrichtungen sind für eine Neigungsverstellung von Kraftfahrzeugsitzen vorgesehen. Hierzu ist ein erstes Verstellglied 20 ortsfest angeordnet, es wird mit einer (nicht dargestellten) Bodengruppe eines Kraftfahrzeugs verbunden. Das erste Verstellglied 20 hat eine Zahnstange 21 mit insgesamt drei nach links vorspringenden Zähnen 22. Die Position eines zweiten Verstellgliedes 24 kann gegenüber dem ersten Verstellglied 20 schrittweise in — wie hier dargestellt — drei Höhenstufen eingestellt werden. Die Anzahl der Einstellungen ist jedoch grundsätzlich nach oben nicht begrenzt. Gezeigt ist die mittlere Höheneinstellposition.

Das zweite Verstellglied 24 hat eine Führungsöffnung 26, in der ein Treibrad 28 angeordnet ist. Dieses Treibrad kann durch eine Stellachse 30 und vorzugsweise mittels eines Handrades gedreht werden. Parallel zur Stellachse 30 springen am Treibrad 28 mindestens drei auf einem Kreisbogen um die Stelachse 30 angeordnete Bolzen 32, 33 und 34 vor, von denen in der gezeigten Normalposition, die eine Ruhe- und Arretierungsstellung darstellt, jeweils zwei, hier die Bolzen 32 und 33, in Eingriff mit Zahnbuchten der Zahnstange 21 stehen.

Die Führungsöffnung wird von zwei, jeweils rechtwinklig zur Zahnstange 21 verlaufenden Abstützflächen 36, 38 begrenzt.

An diesen liegt das Treibrad 28 jeweils in einem Abstützungspunkt 40, 42 an.

Der rechtwinklig zur Zahnstange 21 bestimmte Abstand L (siehe Figur 1) dieser Abstützungspunkte 40, 42 von einer Verbindungslinie 44 der beiden im Eingriff befindlichen Bolzen 32, 33 steht in einem selbsthemmenden Verhältnis zum lichten Abstand der beiden Abstützflächen 36, 38.

Im Ausführungsbeispiel nach Figur 1 ist das Treibrad 28 als kreisrunde Scheibe ausgebildet. Es befindet sich in einer als Lang-Rundloch ausgebildeten Führungsöffnung 26, wodurch es gegen Bewegungen in Richtung der Zahnstange 21 festliegt, allerdings in Richtung der Zähne ausweichen kann, um die bei einer Verstellbewegung charakteristische Seitenbewegung ausführen zu können. Die Stellachse 30 wird durch eine als Zugfeder ausgebildete Feder 46 so belastet, daß die Bolzen 32, 33 in Eingriff mit den Zähnen der Zahnstange 21 gehalten werden. Alternativ ist, wie strichpunktiert eingezeichnet, die der Zahnstange 21 gegenüberliegende Leiste 48 des ersten Verstellgliedes 20 als Führungsleiste ausgebildet. Sie hat Vorsprünge 50, wobei jedem Zahn der Zahnstange 21 ein Vorsprung 50 direkt gegenübersteht und entspricht. Der Verlauf der Führungsleiste 48 entspricht dem Weg des jeweils freien Bolzens 34 bei Betätigung des Treibrades 28. Insgesamt wird ein Formschluß für die Bewegung des Treibrades erzielt.

Im besonders bevorzugten Ausführungsbeispiel nach Figur 2 ist das Treibrad 28 als Bogendreieck ausgeführt. Es ist in einer quadratischen, abgerundete Ecken aufweisenden Führungsöffnung 26 drehbar, kann aber keine Bewegungen in Richtung der Zahnstange 21 oder quer hierzu ausführen. Wiederum sind insgesamt drei Bolzen 32, 33 und 34 vorgesehen, die auf den Eckpunkten des Treibrades 28 in Form eines Bogendreiecks liegen.

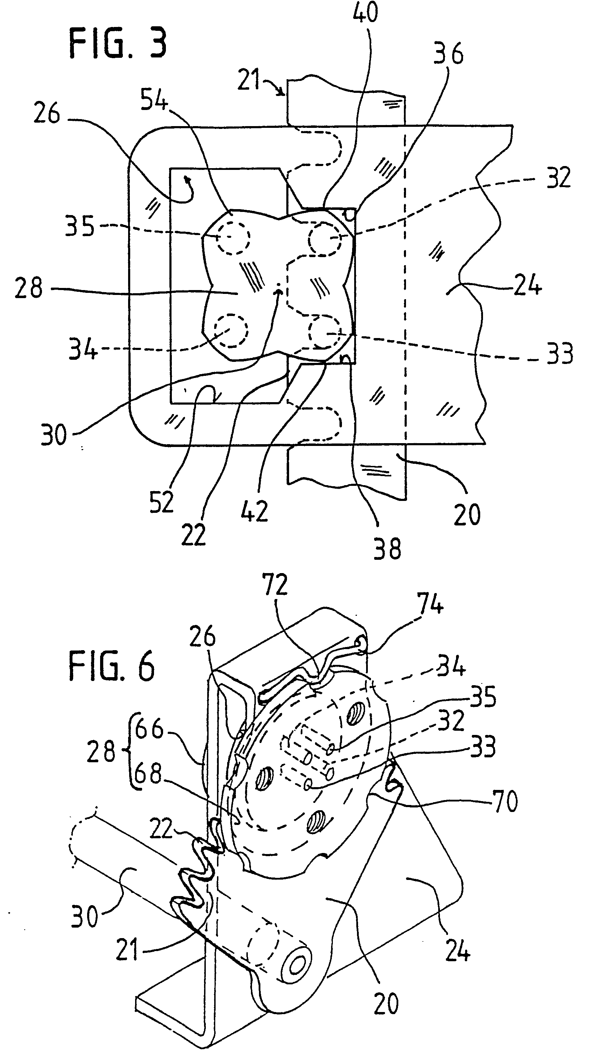

Figur 3 zeigt schließlich eine Ausführung, bei der sich die Führungsöffnung in Richtung der Zähne der Zahnstange 21 erweitert. Die Abstützflächen 36, 38 sind relativ kurz und befinden sich in Höhe der Zähe der Zahnstange 21. Hieran anschließend wird die Führungsöffnung 26 durch quer zur Zahnstange 21 verlaufende Randflächen 52 begrenzt, die einen größeren lichten Abstand als die Abstützflächen 36, 38 voneinander haben. Das Treibrad 28 hat eine stern- oder kissenartige Form, die durch Vorsprünge 54 hervorgerufen wird. Jedem der insgesamt vier Bolzen 32 bis 35 des Treibrades ist ein Vorsprung 54 zugeordnet. Dieser wird von Kreisbögen gleichen Durchmessers um die benachbarten Bolzen begrenzt. Weiterhin sind die Vorsprünge 54 durch einen Kreisbogen um den Mittelpunkt des Treibrades 28 begrenzt, der die genannten Kreisbögen um die benachbarten Bolzen jeweils in den Verbindungslinien der Bolzen schneidet. Diese Schnittpunkte sind die Abstützungspunkte 40, 42.

Bei einem Bogendreieck der hier beschriebenen Art ist jeder Eckpunkt jeweils Mittelpunkt des gegenüberliegenden Kreisbogens. Näherungslösungen hierzu, bei denen zum Beispiel die Bolzen 32, 33, 34 innseits der Ecken des Bogendreiecks liegen und den Mittelpunkt des jeweils gegenüberliegenden Kreisbogens bilden, gehören ebenfalls zur Erfindung.

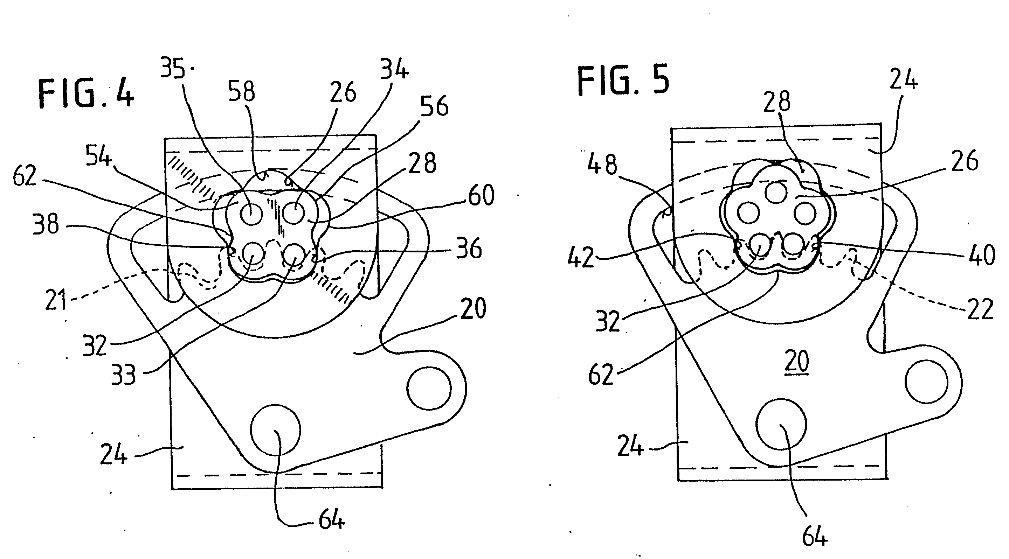

Im Ausführungsbeispiel nach den Figuren 4 und 5 weisen die Treibräder 28 ebenfalls Vorsprünge 54 auf, dabei ist jedem Bolzen 32 bis 35 ein radial außerhalb des Bolzens liegender Vorsprung 54 zugeordnet. Demgemäß sind so viele Vorsprünge 54 wie Bolzen 32 bis 35 vorhanden. Die Vorsprünge sind konvex und werden begrenzt durch erste Kreisbögen 56, die jeweils um den Mittelpunkt des zugehörigen Bolzens 32 bis 35 geschlagen sind. Dabei sind die Radien dieser ersten Kreisbögen 56 untereinander gleich. Sie sind weiterhin etwas kleiner als der Abstand der Mittelpunkte der Bolzen 32 bis 35 vom Mittelpunkt des Treibrades 28, also der Stellachse 30, in den gezeigten Ausführungsbeispielen beträgt dieser Unterschied zehn Prozent. Der Durchmesser der Bolzen 32 bis 35 beträgt etwa ein Drittel des Durchmessers der ersten Kreisbögen 56.

Die Treibräder nach Figur 4 und 5 werden so von einer speziell geformten Führungsöffnung 26 umgriffen, daß sie zwar innerhalb der Führungsöffnung um eine rechtwinklig hierzu verlaufende Achse, die Stellachse 30, drehbar sind, jedoch innerhalb der Ebene der Führungsöffnung 26 nicht, und zwar in keiner Richtung, verschoben werden können. Die Führungsöffnung 26 wird begrenzt durch konkave Buchten 58, von denen anzahlmäßig jeweils eine Bucht 58 mehr vorhanden ist als das Treibrad 28 Bolzen 32 bis 35 und damit Vorsprünge 54 hat. Die konkaven Buchten 58 verlaufen auf zweiten Kreisbögen 60, deren Radius etwas größer ist als der Radius der ersten Kreisbögen 56 (der Unterschied beträgt zum Beispiel fünf Prozent). Die Buchten 58 sind wie die Bolzen 32 bis 35 auf gleichen Teilungswinkeln angeordnet, wodurch sich eine Drehsymmetrie um 90 Grad in Figur 4 um 72 Grad in Figur 5 ergibt. Diese angegebenen Winkel sind zugleich die notwendigen Schwenkwinkel zwischen Rastpositionen, wie sie in Figur 4 und 5 gezeigt sind. Die Mittelpunkte der zweiten Kreisbögen 60 liegen auf einem Kreisbogen um die Stellachse 30, dessen Radius dem Teilkreis der Bolzen 32 bis 35 zuzüglich dem Radius der Bolzen 32 bis 35 entspricht.

Benachbarte Vorsprünge 54 des Treibrades 28 sowie benachbarte Buchten 58 der Führungsöffnung 26 gehen jeweils über Rundungsbereiche 62 glatt ineinander über. Dabei haben die Rundungsbereiche 62 der Führungsöffnung 26 einen etwas kleineren Radius als die Rundungsbereiche 62 des Treibrades 28. Entscheidend für die spielfreie Führung des Treibrades 28 innerhalb seiner Führungsöffnung 26 sind die Rundungsbereiche der Führungsöffnung 26. Diese müssen jeweils soweit nach innen vorspringen, daß das Treibrad 28 spielfrei gehalten wird.

In den Ausführungsbeispielen nach den Figuren 4 und 5 ist das erste Verstellglied 20 als Schwenkarm ausgebildet, der um eine Achse 64 einstellbar verschwenkt werden kann. Die Zahnstange 21 ist dementsprechend bogenförmig um die Achse 64 als Mittelpunkt ausgeführt. Sie ist am radialen Innenrand eines Fensters eines sektorförmigen Blechteils ausgebildet. Der der Zahnstange 21 gegenüberliegende Innenrand dieses Fensters dient zugleich als Führungsleiste 48 (Figur 5) für den der fünf Bolzen, der von den beiden im Einrastzustand befindlichen Bolzen am weitesten entfernt ist. Ein Vergleich der Figuren 4 und 5 zeigt, daß eine derartige Führungsleiste 48 bei ungeradzahliger Bolzenanzahl konstruktiv günstig zu lösen ist. Eine Ausbildung von Vorsprüngen 50 entsprechend der Führungsleiste 48 gemäß Figur 1 ist auch im Ausführungsbeispiel nach Figur 5 möglich.

Das zweite Verstellglied 24 ist in den Ausführungsbeispielen nach den Figuren 4 und 5 als U-förmig umgebogenes Blechteil ausgeführt, daß das erste Verstellglied 20 umgreift. Der lichte Abstand im Bereich der U-förmigen Umbiegung des Verstellgliedes 24 ist nur unwesentlich größer als die Materialdicke des ersten Verstellgliedes 20. In mindestens einem der beiden Schenkel des U-förmigen Verstellgliedes 24 ist die Führungsöffnung 26 vorgesehen, es können auch die beiden Schenkeln ausgleiche, insbesondere deckungsgleiche Führungsöffnungen 26 vorgesehen sein. In mindestens einer Führungsöffnung befindet sich ein Treibrad 28, es können auch beide Führungsöffnungen 26, falls vorhanden, mit je einem Treibrad 28 ausgestattet sein.

Sollen mehrere Verstellvorrichtungen kinematisch miteinander verbunden werden, soll also beispielsweise die Verstellvorrichtung nach den Figuren 4 und 5 für die Einstellung der Höhe der Vorderkante des Fahrzeugsitzes verwendet werden, so werden zu beiden Sitzseiten in bekannter Weise Verstellvorrichtungen vorgesehen, die über eine drehfeste, aber elastische Achse miteinander verbunden sind. In kinematischer Umkehr ist es schließlich möglich, nicht das Treibrad 28, sondern das die Führungsöffnung 26 aufweisende Teil aktiv zu drehen. Dann sind die Bolzen am die Führungsöffnung 26 aufweisenden Teil und nicht am Treibrad 28 befestigt.

Zur Übertragung der Verstellbewegungen von einer, beispielsweise mittels eines Handgriffes, insbesondere eines Drehknopfes, angetriebene Triebstockeinheit zu einer zweiten Triebstockeinheit, beispielsweise auf der anderen Sitzseite, wird eine drehsteife, aber elastische und insbesondere gelenkige Welle verwendet, die die beiden Treibräder der Triebstockeinheiten bzw. vorgelagerte Zahnräder drehfest miteinander verbindet. Für diese Übertragungswelle sind die Ausbildungen gemäß der DE-A-33 21 930 besonders vorteilhaft. Die dort gezeigten Gelenkwellen einschließlich der zugehörigen Beschreibung sind vollinhaltlicher Bestandteil auch der hier vorliegenden Anmeldung für einen Triebstock.

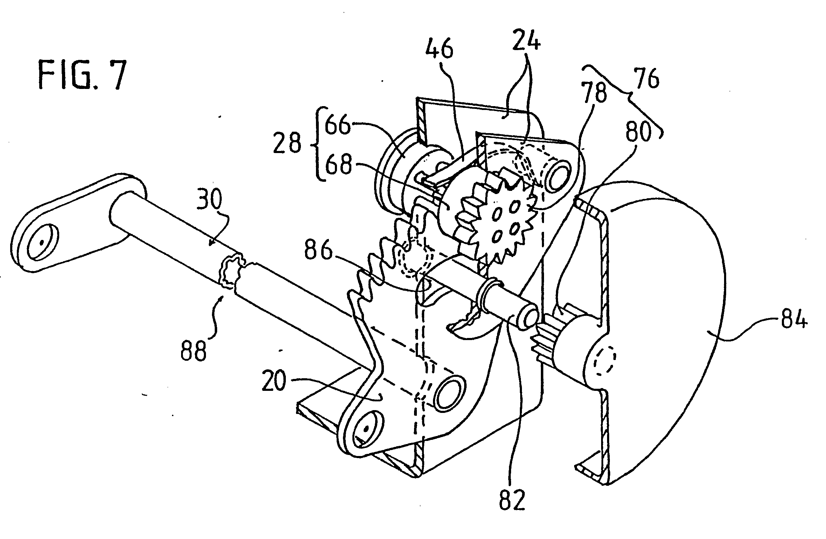

Im Ausführungsbeispiel nach Figur 6 hat ein U-förmig gebogenes zweites Verstellglied 24 zwei fluchtende, kreisförmige Führungsöffnungen 26 für das Treibrad 28, das hier mehrteilig aufgebaut ist. Es setzt sich aus einem gestuften, hinteren Rad 66 und einem vorderen, ebenfalls gestuften Rad 68 zusammen, die über vier Bolzen 32 bis 35 starr miteinander verbunden sind und auf Grund der Abstufungen und der Verbindung über die Bolzen 32 bis 35 axial positioniert sind. Ihr kleinerer Durchmesser ist dem Innendurchmesser der Führungsöffnung 26 angepaßt, so daß sich das Treibrad 28 im Gegensatz zu der Vorrichtung nach Figur 1 nicht quer bewegt.

Am vorderen Rad 68 sind insgesamt sechs halbrunde Rastbuchten 70 periphär ausgebildet, in die eine ein Rastelement 72 ausbildende Feder 74 eingreift. Dadurch werden Zwischenpositionen der Vorrichtung fixiert, die nicht Normalpositionen sind, in denen also nicht zwei der vier Bolzen 32 bis 35 zwischen Zähne 22 der kreisbogenförmig um die Stellachse 30 gekrümmt verlaufenden Zahnstange 21 exakt eingreift. Im gezeigten Ausführungsbeispiel nach Figur 6 ist zwar eine Normalposition dargestellt, eine Verdrehung des Treibrades 28 nach links oder rechts in die nächste Rastposition führt aber zu einer Zwischenposition. Dies zeigt zugleich, daß die Rasteinrichtung 70, 72 auch dazu herangezogen werden kann, die Normalpositionen für den Benutzer spürbar vorzugeben, wie dies durch die Feder 46 im Ausführungsbeispiel nach Figur 1 beispielsweise erreicht wird.

Im Ausführungsbeispiel nach Figur 7 schließlich ist dem Treibrad 28 ein Untersetzungsgetriebe 76 mit zwei Zahnrädern 78, 80 vorgeschaltet. Wie im Ausführungsbeispiel nach Figur 6 ist das Treibrad 28 aus zwei gestuften Rädern 66, 68, die durch vier Bolzen 32 bis 35 miteinander starr verbunden sind, aufgebaut. Die Normalpositionen werden durch eine Feder 46, die als Blattfeder ausgebildet ist, vorbelastet.

Das Treibrad 28 ist mittels seiner vier Bolzen 32 bis 35 gleichachsig und drehfest mit dem ersten Zahnrad 78 des Untersetzungsgetriebes 76 verbunden. Das zweite Zahnrad 80, das mit dem ersten ständig kämmt, ist um eine Achse 82 drehbar, die im zweiten Verstellglied 24 gehalten ist. Dieses zweite Zahnrad 80 ist mit einem Handrad 84 gleichachsig und drehfest verbunden. Durch Drehen des Handrades 84 wird damit das Zahnrad 80 gedreht, das wiederum, jedoch mit kleinerer Winkelgeschwindigkeit, das Zahnrad 78 und damit das Treibrad 28 dreht.

Wie die Figur 7 zeigt, ist die Achse 82 durch ein bogenförmiges Langloch 86 des ersten Verstellgliedes 20 geführt. Hierdurch wird der Schwenkwinkel der Verstellvorrichtung begrenzt.

Die Stellachse 30 weist schließlich ein Gelenk 88 auf, auf das oben hingewiesen wurde und der Verbindung mit der gegenliegenden Sitzseite dient.

**Patentansprüche**

1. Triebstock-Verstellvorrichtung, insbesondere für eine Neigungsverstellung von Kraftfahrzeugsitzen, mit einem ersten, eine Zahnstange (21) aufweisenden Verstellglied (20) und einem entlang dieser Zahnstange (21) ver- und einstellbaren zweiten Verstellglied (24), in dem um eine antreibbare Stellachse (30) drehbar ein Treibrad (28) angeordnet ist, an dem parallel zur Stellachse (30) mindestens drei auf einem Kreisbogen um die Stellachse (30) in gleichen Teilungswinkeln angeordnete Bolzen (32, 33, 34) vorstehen, von denen in Normalposition der Verstellvorrichtung zwei in Zahnbuchten der Zahnstange (21) eingreifen, wobei am zweiten Verstellglied (24) eine Führungsöffnung (26) für das Treibrad (28) vorgesehen ist, die von zwei, jeweils quer zur Zahnstange (21) verlaufenden Abstützflächen (36, 38) begrenzt wird und an denen das Treibrad (28) jeweils in Abstützungspunkten (40, 42) anliegt, dadurch gekennzeichnet, daß der rechtwinklig zur Zahnstange (21) bestimmte Abstand L der Abstützungspunkte (40, 42) von der Verbindungslinie der beiden in Eingriff befindlichen Bolzen (32, 33) im selbsthemmenden Verhältnis zum lichten Abstand der beiden Abstützflächen (36, 38) steht.

2. Verstellvorrichtung nach Anspruch 1, dadurch gekennzeichnet, daß die Abstützflächen (36, 38) rechtwinklig zur Zahnstange (21) verlaufen und daß das Treibrad (28) als Bogendreieck ausgebildet ist, welches von drei Kreisbögen mit jeweils übereinstimmendem Radius, deren Mittelpunkte jeweils eine Ecke des Dreiecks sind, begrenzt ist, daß drei Bolzen (32, 33, 34) vorgesehen sind, daß die dem Treibrad (28) angepaßte Führungsöffnung (26) quadratisch ausgeführt ist und daß vorzugsweise die Ecken des Bogendreiecks auf den Mittelpunkten der Bolzen (32, 33, 34) liegen.

3. Verstellvorrichtung nach Anspruch 1, dadurch gekennzeichnet, daß die Abstützflächen (36, 38) rechtwinklig zur Zahnstange (21) verlaufen und daß das Treibrad (28) als eine der Führungsöffnung (26) angepaßte Kreisscheibe ausgebildet ist, deren Radius so groß ist, daß das Verhältnis des Abstandes L zu diesem Radius den Wert der Reibungszahl der Materialien des Treibrades (28) und der Abstützflächen (36, 38) nicht übersteigt und daß vorzugsweise drei Bolzen (32, 33, 34) vorgesehen sind.

4. Verstellvorrichtung nach Anspruch 1, dadurch gekennzeichnet, daß das Treibrad (28) Vorsprünge (54) aufweist, die jeweils begrenzt sind durch um den Mittelpunkt eines jeden Bolzens (32 bis 35) geschlagene und einen übereinstimmenden Radius aufweisende Kreisbögen (56) und die Führungsöffnung (26) nach innen begrenzt ist durch konkave Buchten (58), die durch zweite, jeweils gleiche Radien aufweisende Kreisbögen (60) definiert sind, deren Radius etwas größer ist als der Radius der ersten Kreisbögen (56) und die Anzahl der Buchten (58) um eins größer ist als die Anzahl der Vorsprünge (54).

5. Verstellvorrichtung nach Anspruch 4, dadurch gekennzeichnet, daß die Mittelpunkte der zweiten Kreisbögen (60) auf dem die Außenseite der Bolzen (32 bis 35) tangierenden Umkreis um die Bolzen (32 bis 35) und damit um die Stellachse (30) liegen.

6. Verstellvorrichtung nach Anspruch 4 oder 5,

dadurch gekennzeichnet, daß benachbarte Vorsprünge (54) und ebenfalls benachbarte Buchten (58) durch Rundungsbereiche (62) glatt ineinander übergehen und daß die Radien der Rundungsbereiche (62) der Führungsöffnung (26) etwas kleiner ist. als die Radien der Rundungsbereiche (62) des Treibrades (28).

7. Verstellvorrichtung nach Anspruch 1, dadurch gekennzeichnet, daß die Abstützflächen (36, 38) rechtwinklig zur Zahnstange (21) verlaufen und nicht wesentlich über die Kopflinie der Zähne der Zahnstange (21) ragen, und daß die Führungsöffnung (27) quer zur Zahnstange (21) verlaufend hieran anschließend von Randflächen (52) begrenzt wird, die einen größeren lichten Abstand voneinander als die Abstützflächen (36, 38) haben und daß insbesondere jedem Bolzen (32 bis 35) des Treibrades (28) ein radialer Vorsprung (54) zugeordnet ist, der von den Kreisbögen gleichen Durchmessers um die dem betrachteten Bolzen benachbarten Bolzen (32 bis 35) begrenzt ist.

8. Verstellvorrichtung nach einem der Ansprüche 1 bis 7, dadurch gekennzeichnet, daß das Treibrad (28) oder ein mit ihm drehfest verbundenes, gleichachsiges Teil Rastvorsprünge oder Rastbuchten (70) aufweist, in die ein mit dem zweiten Verstellglied (24) verbundenes Rastelement (72) selbsttätig eingreifen kann, und daß vorzugsweise mehr Rastvorsprünge bzw. Rastbuchten (70) als Bolzen (32, 33, 34, 35) vorgesehen sind.

9. Verstellvorrichtung nach einem der Ansprüche 1 bis 8, dadurch gekennzeichnet, daß das Treibrad (28) mit einem Rad, vorzugsweise Zahnrad (78) eines vorgelegten Untersetzungsgetriebes (76) verbunden ist, dessen zweites Rad-(Zahnrad 80) am zweiten Verstellglied (24) um eine Achse (82) drehbar gelagert ist.

**Claims**

1. Pin type adjustment device, in particular for a tilt adjustment of vehicle seats, with a first adjusting member (20) comprising a toothed rack (21) and a second adjusting member (24) able to be moved and adjusted along this toothed rack (21), in which adjusting member is located a driving wheel (28) rotatable about a drivable adjusting shaft (30), on which driving wheel (28), parallel to the adjusting shaft (30), project at least three pins (32, 33, 34) located on a circular arc about the adjusting shaft (30) at equal angular spacings, whereof two engage in tooth recesses of the toothed rack (21), in the normal position of the adjustment device, whereby a guide opening (26) for the driving wheel (28) is provided on the second adjusting member (24), which guide opening (26) is defined by two support surfaces (36, 38) each extending transverse to the toothed rack (21) and against which the driving wheel (28) bears respectively at support points (40, 42), characterised in that the distance L of the support points (40, 42) from the connecting line of the two engaged pins (32, 33) in the direction at right angles to the toothed rack (21) is in self-locking relationship with respect to the clear distance between the two support surfaces (36, 38).

2. Adjustment device according to Claim 1, characterised in that the support surfaces (36, 38) extend at right angles to the toothed rack (21) and that the driving wheel (28) is constructed as a curved triangle, which is defined by three circular arcs each with an identical radius, whereof the centre points are each one angle of the triangle, that three pins (32, 33, 34) are provided, that the guide opening (26) adapted to the driving wheel (28) is square and that preferably the angles of the curved triangle lie at the centres of the pins (32, 33, 34).

3. Adjustment device according to Claim 1, characterised in that the support surfaces (36, 38) extend at right angles to the toothed rack (21) and that the driving wheel (28) is constructed as a circular disc adapted to the guide opening (26), the radius of which circular disc is so great that the ratio of the distance L to this radius does not exceed the value of the coefficient of friction of the materials of the driving wheel (28) and of the support surfaces (36, 38) and that preferably three pins (32, 33, 34) are provided.

4. Adjustment device according to Claim 1, characterised in that the driving wheel (28) comprises projections (54), which are each defined by circular arcs (56) curved around the centre of each pin (32 to 35) and having an identical radius and the guide opening (26) is limited on the inside by concave recesses (58), which are defined by second circular arcs (60) each having the same radius, the radius of which is somewhat greater than the radius of the first circular arcs (56) and the number of recesses (58) is greater by one than the number of projections (54).

5. Adjustment device according to Claim 4, characterised in that the centres of the second circular arcs (60) lie around the pins (32 to 35) and thus around the adjusting shaft (30) on the circumference touching the outside of the pins (32 to 35).

6. Adjustment device according to Claim 4 or 5, characterised in that adjacent projections (54) and likewise adjacent recesses (58) pass smoothly one into the other by rounded areas (62) and that the radii of the rounded areas (62) of the guide opening (26) are somewhat smaller than the radii of the rounded areas (62) of the driving wheel (28).

7. Adjustment device according to Claim 1, characterised in that the support surfaces (36, 38) extend at right angles to the toothed rack (21) and do not project substantially beyond the top line of the teeth of the toothed rack (21) and that the guide opening (27) extending transverse to the toothed rack (21) and adjoining it is defined by boundary surfaces (52) which have a greater mutual clearance than the support surfaces (36, 38) and that associated in particular with each pin (32 to 35) of the driving wheel (28) is a radial projection (54), which is defined by the circular arcs of the same diameter around the pins (32 to 35) adjacent to the pin in question.

8. Adjustment device according to one of Claims 1 to 7, characterised in that the driving wheel (28) or a coaxial part connected thereto in a non-rotary manner comprises locking projections or locking recesses (70) in which a locking member (72) connected to the second adjusting member (24) may automatically engage and that preferably more locking projections or locking recesses (70) are provided than pins (32, 33, 34, 35).

9. Adjustment device according to one of Claims 1 to 8, characterised in that the driving wheel (28) is connected to a wheel, preferably a toothed wheel (78) of a preceding reduction gearing (76), whereof the second wheel (toothed wheel 80) on the second adjusting member (24) is mounted to rotate about a shaft (82).

**Revendications**

1. Dispositif de réglage à fuseau, notamment pour le réglage de l'inclinaison de sièges de véhicules automobiles, qui comprend un premier organe de réglage (20) comportant une crémaillère (21) et un deuxième organe de réglage (24) qui peut être déplacé et réglé le long de cette crémaillère (21) et dans lequel est monté un pignon (28) pouvant tourner autour d'un axe de réglage (30) qui peut être entraîné et comportant, parallèlement à l'axe de réglage (30), au moins trois chevilles (32, 33, 34) qui sont disposées sur un arc de cercle autour de l'axe de réglage (30) suivant des subdivisions angulaires égales et dont deux s'engagent, dans la position normale du dispositif de réglage, dans des intervalles entre les dents de la crémaillère (21), le deuxième organe de réglage (24) comportant une ouverture de guidage (26) pour le pignon (28) qui est délimitée par deux surfaces d'appui (36, 38) orientées chacune transversalement par rapport à la crémaillère (21) contre lesquelles le pignon (28) s'applique en des points d'appui (40, 42), caractérisé en ce que la distance L, comptée perpendiculairement à la crémaillère (21) entre les points d'appui (40, 42) et la ligne qui joint les deux chevilles (32, 33) qui sont en prise est en rapport irréversible avec la distance libre entre les deux surfaces d'appui (36, 38).

2. Dispositif de réglage selon la revendication 1, caractérisé en ce que les surfaces d'appui (36, 38) sont orientées perpendiculairement à la crémaillère (21) et en ce que le pignon (28) a la forme d'un triangle curviligne délimité par trois axes de cercle de même rayon dont les centres sont les sommets du triangle, en ce que le dispositif comporte trois chevilles (32, 33, 34), en ce que l'ouverture de guidage (26) qui est adaptée au pignon (28) est carrée et en ce que les sommets du triangle se trouvent de préférence aux centres des chevilles (32, 33, 34).

3. Dispositif de réglage selon la revendication 1, caractérisé en ce que les surfaces d'appui (36, 38) sont orientées perpendiculairement à la crémaillère (21) et en ce que le pignon (28) a la forme d'un disque circulaire qui est adapté à l'ouverture de guidage (26) et dont le rayon est assez grand pour que le rapport entre la distance L et ce rayon ne dépasse pas la valeur du coefficient de frottement des matériaux constituant le pignon (28) et les surfaces d'appui (36, 38) et en ce que le dispositif comporte de préférence trois chevilles (32, 33, 34).

4. Dispositif de réglage selon la revendication 1, caractérisé en ce que le pignon (28) comporte des parties saillantes (54) qui sont délimitées chacune par des arcs de cercle (56) qui sont décrits autour du centre de chaque cheville (32 à 35) et ont tous le même rayon et en ce que l'ouverture de guidage (26) est délimitée vers l'intérieur par des évidements concaves (58) qui sont délimités par des arcs de cercle (60) de même rayon qui est légèrement supérieur au rayon des premiers arcs de cercle (56) et en ce que le nombre des évidements (58) dépasse d'une unité le nombre des parties saillantes (54).

5. Dispositif de réglage selon la revendication 4, caractérisé en ce que les centres des deuxièmes arcs de cercle (60) se trouvent, sur le cercle circonscrit tangent au côté extérieur des chevilles (32 à 35), autour des chevilles (32 à 35) et, par conséquent, autour de l'axe de réglage (30).

6. Dispositif de réglage selon l'une des revendications 4 ou 5, caractérisé en ce que les parties saillantes voisines (54) et les évidements (58) également voisins se raccordent les uns aux autres par des zones d'arrondis (62) et en ce que des zones d'arrondis (62) de l'ouverture de guidage (26) sont légèrement inférieurs aux rayons des zones d'arrondis (62) du pignon (28).

7. Dispositif de réglage selon la revendication 1, caractérisé en ce que les surfaces d'appui (36, 38) sont orientées perpendiculairement à la crémaillère (21) et ne dépassent pas de beaucoup au-dessus de la ligne de tête des dents de la crémaillère (21) et en ce que l'ouverture de guidage (27), orientée transversalement par rapport à la crémaillère (21), est délimitée ensuite par des surfaces marginales (52) qui sont séparées par une distance libre plus grande que celle qui sépare les surfaces d'appui (36, 38) et en ce que, notamment, à chaque cheville (32 à 35) du pignon (28) correspond une partie saillante radiale (54) qui est délimitée par les arcs de cercle de même diamètre entourant les chevilles (32 à 35) voisines de la cheville en question.

8. Dispositif de réglage selon l'une des revendications 1 à 7, caractérisé en ce que le pignon (28) ou une pièce coaxiale reliée au pignon sans possibilité de rotation relative comportent des parties saillantes ou des évidements d'arrêt (70) dans lesquels peut s'engager automatiquement un élément d'arrêt (72) relié au deuxième organe de réglage (24) et en ce qu'il y a de préférence davantage de parties saillantes ou d'évidements d'arrêt (70) que de chevilles (32, 33, 34, 35).

9. Dispositif de réglage selon l'une des revendications 1 à 8, caractérisé en ce que le pignon (28) est relié à une roue, de préférence une roue dentée (78), d'un engrenage démultiplicateur (76) monté en avant dont la deuxième roue (roue dentée 80) est montée dans le deuxième organe de réglage (24) de manière à pouvoir tourner autour d'un axe (82).

FIG. 1

0 116 965

FIG. 2

FIG. 3

FIG. 6

2

FIG. 4

FIG. 5

0 116 965

FIG. 7

0 116 965